Europäisches Patentamt

European Patent Office

Office européen des brevets

(11) Veröffentlichungsnummer: **0 250 844**
**A2**

(12) **EUROPÄISCHE PATENTANMELDUNG**

(21) Anmeldenummer: 87107459.7

(51) Int. Cl.⁴: **F16H 57/12**

(22) Anmeldetag: 22.05.87

(30) Priorität: 21.06.86 DE 3620863

(43) Veröffentlichungstag der Anmeldung:
07.01.88 Patentblatt 88/01

(84) Benannte Vertragsstaaten:
AT BE CH DE ES FR GB IT LI LU NL SE

(71) Anmelder: IMS Morat Söhne GmbH
Hauptstrasse 52
D-7821 Eisenbach 1(DE)

(72) Erfinder: Ketterer, Thomas
Talstrasse 22
D-7820 Titisee-Neustadt(DE)

(74) Vertreter: Schmitt, Hans, Dipl.-Ing. et al
Patentanwälte Dipl.-Ing H. Schmitt Dipl.-Ing.
W. Maucher Dreikönigstrasse 13
D-7800 Freiburg(DE)

(54) Getriebe mit Axialspielausgleich.

(57) Ein Getriebe (1) mit wenigstens einem Getriebe-rad (2), welches eine axiale Lagerung (6) und eine axial wirkende, im Gehäuse (3) oder an der Innen-seite eines aus Metall bestehenden Gehäusedeckels (4) befindliche Anlagefläche (5) aufweist, besitzt als Axialspielausgleich kalt angeformte, gegen das Getrieberad (2) gerichtete über den Umfang verteilte Verformungen (10) an der Anlagefläche (5) des Gehäuses (3) oder des Gehäusedeckels (4). Diese Konstruktion ermöglicht ein Verfahren, in welchem die zeitaufwendige Beseitigung des Axialspieles durch Anpassung von Distanzscheiben ersetzt wird durch ein automatisches Einpressen der axialspie-lausgleichenden Verformungen nach der Montage. Die hierzu erforderliche Verformungsvorrichtung sorgt dafür, daß die aufgewandte Verformungskraft kleiner bleibt als die zum axialen Verformen des Getrieberades (2) notwendige Kraft.

Fig. 1

## Getriebe mit Axialspielausgleich

Die Erfindung betrifft ein Getriebe mit wenigstens einem Getrieberad, welches eine axiale Lagerung und eine axial wirkende, im Gehäuse oder an der Innenseite eines aus Metall bestehenden Gehäusedeckels befindliche Anlagefläche aufweist und zwischen Anlagefläche und dem Getrieberad eine Abstützung vorhanden sowie zwischen Abstützung und Anlagefläche ein Axialspielausgleich vorgesehen ist.

Derartige Getriebe sind in unterschiedlichster Ausführung bekannt. Vor allem bei Spindelmotorgetrieben, wo sehr starke Untersetzungen erzeugt werden und die Mutter in axialer Richtung feststehen soll, wobei vergleichsweise hohe Kräfte zu übertragen sind, kann es wichtig sein, daß die Mutter axialspielfrei aber dennoch drehbar in der eingangs erwähnten Art gelagert ist. Da die Fertigung in aller Regel nicht so genau durchgeführt werden kann, daß in axialer Richtung von vornehrein Spielfreiheit besteht, muß die Spielfreiheit bei der Montage nachträglich durch zusätzliche Ausgleichsscheiben in der Regel zwischen Anlagefläche des Getriebedeckels und Abstützscheibe hergestellt werden. Dies kann unter Umständen ein mehrfaches Öffnen und Schließen des Getriebedeckels beinhalten, so daß der Axialspielausgleich den Zeitaufwand bei der Montage erheblich vergrößert. Dies gilt auch dann, wenn die axiale Abstützung des entsprechenden Getrieberades, beim vorerwähnten Beispiel die Spindelmutter, direkt von der Anlagefläche des Getriebegehäuses oder Deckels gebildet ist.

Es besteht deshalb die Aufgabe, ein Getriebe der eingangs erwähnten Art zu schaffen, bei welchem der Axialspielausgleich bei der Montage wesentlich schneller und somit kostensparend durchführbar ist.

Die Lösung der Aufgabe besteht darin, daß als Axialspielausgleich bzw. -einengung nach der Montage des Getriebes kalt angeformte, gegen das Getrieberad gerichtete, über den Umfang verteilte Verformungen in der Anlagefläche des Gehäuses bzw. des Gehäusedeckels vorgesehen sind.

Der wesentliche Vorteil des erfindungsgemäßen Getriebes liegt darin, daß der Arbeitsaufwand und damit die Kosten der Herstellung wesentlich geringer sind als die Herstellung der bekannten Getriebe. Dies ist in erster Linie darauf zurückzuführen, daß das Axialspiel nach der Montage bei geschlossenem Gehäuse ausgeglichen werden kann. Dies erspart die Arbeiten des Aufschraubens des Gehäusedeckels oder, wie in manchen Fällen, darüberhinaus das Ausbauen des Getrieberades, und macht den langwierigen Prozeß des Ausprobierens von Distanzscheiben o. ä.

unnötig. Die eingepreßten Verwölbungen übernehmen mit gleicher Sicherheit die Axialspieleinengende Funktion wie die bisher üblichen Distanzscheiben o. ä. .

Eine gleichmäßige Einengung des Axialspieles wird insbesondere dadurch erreicht, daß die kalt ausgeformten Vorsprünge gleichmäßig am Umfang verteilt sind und/oder als gleichmäßig umlaufende Wulst ausgebildet sind und/oder daß im Bereich eines Getriebeaustrittes der Randbereich insgesamt z. B. trichterartig nach innen verformt ist.

Um das Getriebegehäuse durch die Kaltverformung nicht zu verziehen und um eine gleichmäßige Verformung der Anlagefläche mit einem "weichen" Preßvorgang zu erreichen, ist es zweckmäßig, wenn der die Anlagefläche aufweisende Gehäuseteil aus einem kalt fließfähigen Werkstoff, insbesondere Metall, vorzugsweise Zink-Druck-Guß, einer Aluminiumlegierung, einer Stahllegierung od. dgl. besteht. Der Verformungsvorgang wird darüberhinaus dann erleichtert, wenn der zu verformende Bereich der Anlagefläche gegenüber dem übrigen Getriebegehäuse vorzugsweise eine verringerte Wandstärke hat. Hierdurch wird auch, wie schon durch die Wahl des Werkstoffes (siehe oben), die Gefahr vermindert, daß das Gehäuse durch den Verformungsvorgang überlastet und dadurch verformt wird.

Unabhängig davon, ob die axiale Lagerung des Getrieberades, dessen Spiel einzuengen ist, aus einem Gleit-oder Wälzlager besteht, erweist es sich als vorteilhaft, daß zwischen der Anlagefläche des Getriebegehäuses oder-deckels und dem Getrieberad eine Abstützscheibe angeordnet ist, die vorzugsweise aus gehärtetem Stahl besteht. Durch diese Ausgleichsscheibe werden die axialen Lagerkräfte gleichmäßig aufgefangen, ohne daß es durch die distanzverringernden Verwölbungen auf der Innenseite des Getriebedeckels zu punktuell erhöhtem Druck auf das Getrieberad bzw. die Stellen der Verwölbung kommt. Die Anlauffläche bleibt glatt, woduch einer erhöhten Reibung an den Stellen der Verwölbung und damit einem erhöhten Verschleiß der Lagerflächen vorgebeugt wird.

In einer weiteren Ausgestaltung der Erfindung ist für Getriebe, in welchem eine Durchtrittsöffnung durch das Getriebegehäuse bzw. dem Gehäusedeckel als radiale Lagerung des Getrieberades dient, ein zusätzlicher Radialspielausgleich nach der Montage des Getriebes möglich. Dazu kann an der Seite des Getrieberades, an dem die Verwölbungen zur Axialspieleinengung vorgesehen sind, der Innenrand der Durchtrittsöffnung über den Umfang in radialer Richtung gegen das Getriebe kalt verformt sein.

Die Erfindung betrifft auch ein Verfahren zur Herstellung des vorbeschriebenen Getriebes, insbesondere zur Einengung des Axialspieles wenigstens eines Getrieberades. Dieses Verfahren ist insbesondere dadurch gekennzeichnet, daß nach dem Zusammenbau des Getriebes die Anlagefläche für das Getrieberad oder für eine zwischen Getrieberad und der Anlagefläche befindliche Abstützscheibe von außen her nach innen mit einer begrenzten Kraft - unterhalb der ein axiales Verformen des Getrieberades bewirkenden Kraft -so verformt wird, daß das ursprünglich vorhandene Axialspiel eingeengt wird. Die Vorteile dieses Verfahrens liegen in der Reduzierung des Arbeitsaufwandes zur Einengung des Axialspieles von Getrieberädern. Das nachträgliche Aufschrauben des Getriebes und Einlegen von Distanzringen oder --scheiben entfällt. Da die Kraft bei der Materialverformung begrenzt ist, besteht keine Gefahr, daß durch den Verformungsprozeß das Getrieberad und/oder das Gehäuse verformt werden.

Da die Verformungen kalt in den Gehäusedeckel bzw. in das Gehäuse eingepreßt werden, ist das Verfahren auch zur Axialspieleinengung von Kunststoffgetrieberädern anwendbar, weil die Gefahr des Schmelzens des Kunststoffes, wie sie bei heißer Verformung auftritt, vermieden wird.

Um die Bearbeitungszeit für die Einengung bzw. den Ausgleich des Axialspieles klein zu halten und um die Gleichmäßigkeit der Verformungen zu erzielen, werden zweckmäßigerweise alle Verformungen gleichzeitig in dem Gehäusedeckel bzw. in das Gehäuse eingepreßt.

Zur Erreichung eines kombinierten Axial-und Radialspielausgleiches von Getrieben, in welchen eine Durchtrittsöffnung durch den Gehäusedeckel als radiale Lagerung des Getrieberades ausgebildet ist, können die Verformungen vorzugsweise, dem Ausmaß der erforderlichen radialen Verwölbung entsprechend, nahe dem Umfang der radialen Lagerung in den Gehäusedeckel bzw. in das Gehäuse eingepreßt werden. Das Verfahren beruht in dieser Ausgestaltung darauf, daß durch den in axialer Richtung durchgeführten Preßvorgang auf das Material des Gehäusedeckels bzw. des Gehäuses der bewirkte Verschiebungsdruck bzw. die Materialverdrängung nicht nur in axialer, sondern zu einem geringen Teil auch in radialer Richtung erfolgt. Eine merkbare Verformung in radialer Richtung entsteht aber nur dann, wenn die Preßstellen nahe genug am Innenrand der Durchtrittsöffnung liegen. Somit ist es möglich, durch die Variation des Abstandes der Preßstellen vom inneren Rand der Durchtrittsöffnung bzw. der radialen Lagerung des Getrieberades gleichzeitig mit der Einengung des Axialspiels im selben Arbeitsgang auch ein etwa vorhandenes Radialspiel auszugleichen. Für diesen Fall ergibt sich somit eine weitere Steigerung der Effizienz des vorbeschriebenen Verfahrens.

Die Erfindung betrifft auch eine Vorrichtung zur Durchführung des vorbeschriebenen Verfahrens. Diese Vorrichtung besteht aus einem Widerlager zum Einspannen bzw. Halten des Getriebes sowie aus einer Stempeleinheit mit einem bewegbaren Stempel, der von einem Arbeitszylinder oder einem Spindelmotor od. dgl. bewegt wird, wobei der Stempel als Verformungswerkzeug ausgebildet ist und in der Stempeleinheit ein Kraftbegrenzer vorgesehen ist, der über einen Regelkreis beim Erreichen der vorbestimmten höchsten Verformung selbsttätig den weiteren Vorschub des Stempels unterbindet. Die Vorrichtung erlaubt es somit, die Begrenzung der Kraft zur kontrollierten Verformung des Gehäusedeckels bzw. des Gehäuses automatisch vorzunehmen.

Damit ergibt sich auch die Möglichkeit, den gesamten Vorgang der Axialspieleinengung zu automatisieren, nämlich dann, wenn das Einspannen und Entfernen des Getriebes aus dem Widerlager mechanisiert wird. Diese Möglichkeit bestand bei dem auf Handarbeit beruhenden Axialspielausgleich durch das Ausprobieren verschiedener Distanzscheiben nicht. Durch die automatische Einhaltung der wirkenden Verformungskräfte wird auch eine Beschädigung des Getriebes durch zu hohen Preßdruck vermieden.

Als Stempelantrieb kann ein Arbeitszylinder verwandt werden, der mit einem Kolben versehen ist, und als Kraftbegrenzer kann eine Kraftmeßdose zur automatischen Ansteuerung des Arbeitszylinders angebracht sein, die beim Erreichen der vorbestimmten höchsten Verformungskraft selbsttätig den weiteren Vorschub des Stempels unterbindet.

Der als Verformungswerkzeug dienende Stempel weist in einer Ausgestaltung der erfindungsgemäßen Vorrichtung eine Scheibe mit vorzugsweise auf einem Kreis angeordneten Vorsprüngen, insbesondere Dornen od. dgl. auf, die zur Erreichung ausgeprägter Verformung spitzwinklig oder zur Erreichung einer flachen Verformung stumpfwinklig ausgebildet sind.

Durch die Wahl der Form der Vorsprünge kann somit auch die Gestalt der Verformungen der Anlagefläche beeinflußt werden. Sind die Vorsprünge beispielsweise als spitze Dornen mit großem Abstand voneinander ausgebildet, bilden sich in der Anlagefläche einzelne Verwölbungen aus. Weist die Scheibe flache Verwölbungen auf, so wird der zum Verformen notwendige Druck auf den Gehäusedeckel bzw. das Gehäuse erhöht. Hierdurch kann neben einer flachen Verwölbung der Anlagefläche der Gehäusedeckel bzw. das Gehäuse um die Durchtrittsöffnung herum trichterartig nach innen verbogen werden, wodurch das Axialspiel gleichfalls eingeengt wird. Die auf der Scheibe kreisförmig angeordneten Vorsprünge können auch als kreisförmiger Keil ausgestaltet sein, der eine gleichmäßige Verformung der Anlagefläche bzw. eine trichterartige Verbiegung des Gehäusedeckels bzw. des entsprechenden Gehäuseteiles zur Durchtrittsöffnung hin bewirken kann. Durch die Form der Vorsprünge kann zudem die zur Verformung benötigte Kraft variiert werden. Dabei ist der jeweils erforderliche Druck auf den Gehäusedeckel bzw. auf das zu verformende Gehäuseteil umso geringer, je spitzwinkliger die Vorsprünge sind und je kleiner die Oberfläche ist, die durch den Rand der Einpreßstellen festgelegt ist, derjenigen Oberfläche des Gehäusedeckels bzw. des zu verformenden Gehäuseteiles also, die von den Vorsprüngen, Dornen od. dgl. eingedrückt wird.

Nachstehend ist die Erfindung mit ihren ihr als wesentlich zugehörigen Einzelheiten anhand der Zeichnungen noch näher beschrieben.

Es zeigt :

Fig. 1 einen Teilquerschnitt durch ein Spindelgetriebe mit Axialspielausgleich,

Fig. 2 einen Teilquerschnitt durch ein Spindelgetriebe gemäß Fig. 1 vor dem Axialspielausgleich,

Fig. 3 einen Längsschnitt durch eine Verformungsvorrichtung mit eingespanntem Getriebe in Ausgangsstellung,

Fig. 4 einen Längsschnitt durch eine Verformungsvorrichtung gemäß Fig. 3 mit eingespanntem Getriebe in Arbeitsstellung,

Fig. 5 einen Längsschnitt durch ein Kegelradgetriebe mit Gleitlagerung und Axialspielausgleich,

Fig. 6 einen Längsschnitt durch ein Kegelradgetriebe mit Wälzlagerung und Axialspielausgleich,

Fig. 7 Teilquerschnitt durch ein Schneckengetriebe mit Gleitlagerung und Axialspielausgleich,

Fig. 8 einen Teilquerschnitt durch ein Schneckengetriebe mit Wälzlagerung und Axialspielausgleich.

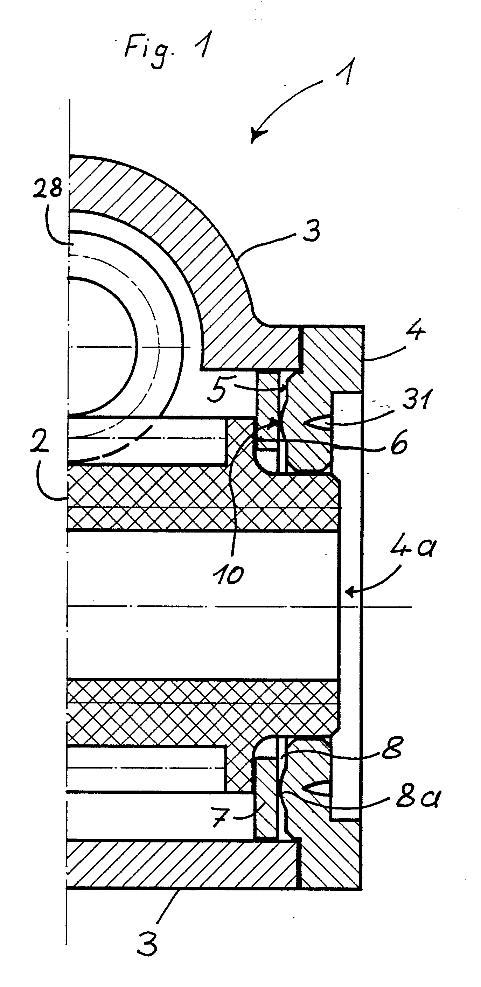

Fig. 1 zeigt einen Teilquerschnitt durch ein Spindelgetriebe 1, wobei das Getrieberad 2 (deren Achse in der Papierebene liegt) von einem Schneckenrad 28 (Achse senkrecht zur Papierebene) angetrieben wird. Schneckenrad 28 und Getrieberad 2 befinden sich in einem Gehäuse 3, welches von der Seite her mit einem Gehäusedeckel 4, welcher die Durchtrittsöffnung 4 a für die hier nicht dargestellte Spindelwelle enthält, geschlossen ist. Die Innenseite des Gehäusedeckels 4 dient als Anlagefläche 5 für die axiale Abstützung über die Abstützscheibe 7, welche getrieberadseitig als axiales Gleitlager dient.

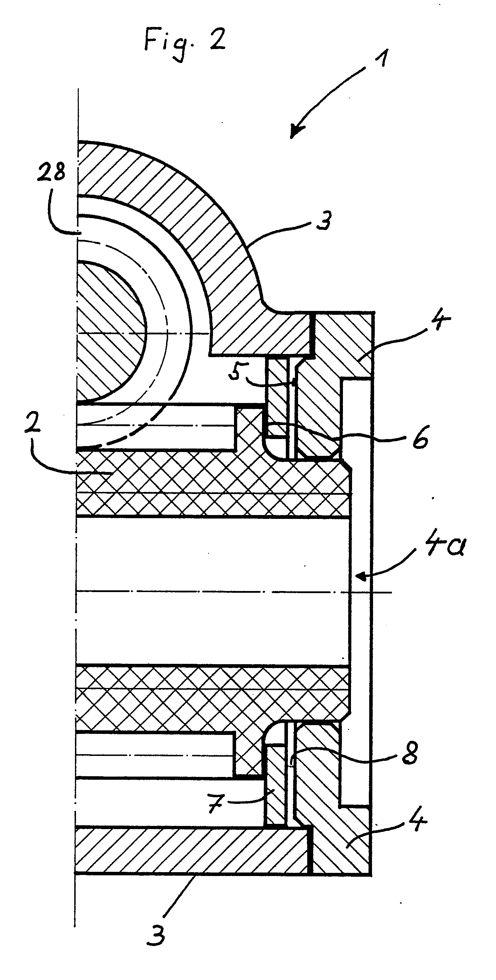

Deutlich sichtbar ist das Spiel 8 zwischen Anlagefläche 5 des Gehäusedeckels 4 (vergl. auch Fig. 2) durch die Verformungen 10 in der Anlagefläche 5 auf das für das Gleiten notwendige Spiel, im dargestellten Beispiel praktisch auf 0 ausgeschrieben, eingeengt. Die in Fig. 1 dargestellten Verformungen 10 sind gleichmäßig über den gesamten Umfang des Gehäusedeckels 4 verteilt. Hierdurch wird eine gleichmäßige Abstützung der Abstützscheibe 7 erreicht, welche ihrerseits die axialen Lagerkräfte des Getrieberades 2 ausgleichend auf die Verwölbungen des Gehäusedeckels 4 überträgt.

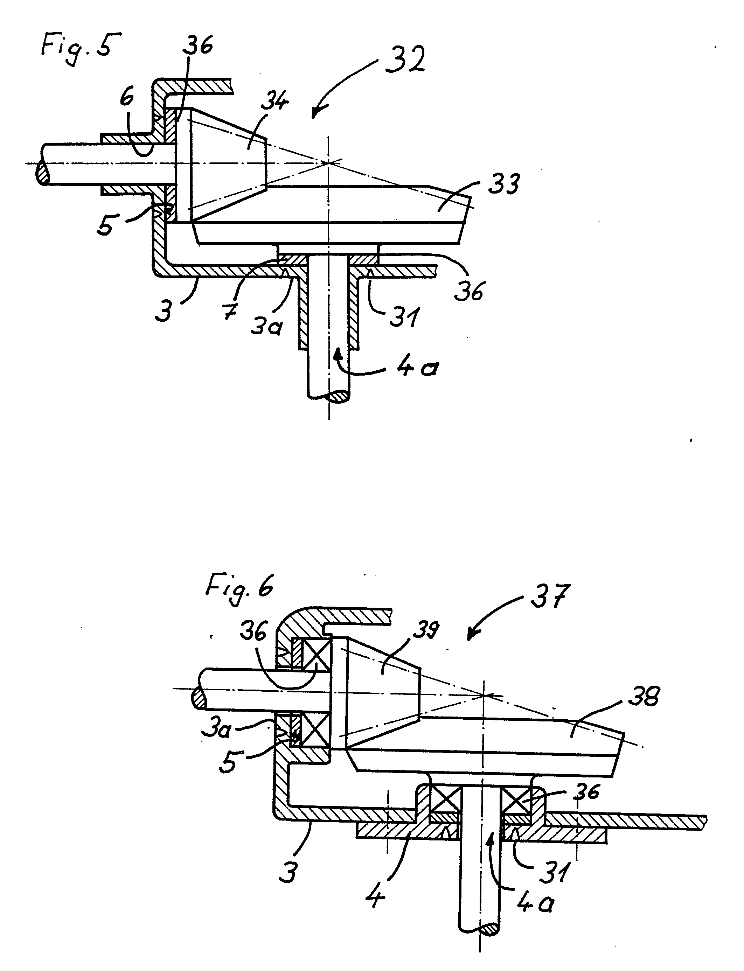

Fig. 5 bis 8 zeigen in schematischer Vereinfachung die Ausgestaltung der Erfindung bei verschiedenen Getriebe-und Lagerarten.

Fig. 5 zeigt ein im ganzen mit 32 bezeichnetes Kegelradgetriebe, dessen Kegelräder 33 und 34 in einem Gehäuse 3 gleitend gelagert sind. Das axiale Lagerspiel in den Lagern 36 ist im Ausführungsbeispiel ausgeglichen durch minimale, in der Zeichnung nicht sichtbare Verformungen 10 der Anlagefläche 5. Sichtbar sind jedoch die Einpreßstellen 31, die das Verformungswerkzeug hinterlassen und welche, wie in der Zeichnung nicht erkennbar, über den Umfang des Anlagebereiches der Abstützscheibe 7 verteilt sind.

Fig. 6 zeigt ein erfindungsgemäßes Kegelradgetriebe mit Wälzlagerung 36. Dieses Ausführungsbeispiel macht deutlich, daß die Axialspieleinengung nicht auf Getriebe mit gleitend gelagerten Getrieberädern beschränkt ist. Die erfindungsgemäße Konstruktion erspart hier einerseits das Aufschrauben des Lagerdeckels 4, andererseits einen sonst aufwendigen zur Axialspieleinengung notwendigen Ausbau des schwer zugänglichen Getrieberades 39. Die hier nicht sichtbaren Verformungen der Anlageflächen 5 werden auch in diesem Ausführungsbeispiel einfach in den Gehäusedeckel 4 bzw. in das Gehäuse selbst im Bereich der Anlagefläche 5 des Getrieberades 39 eingepreßt.

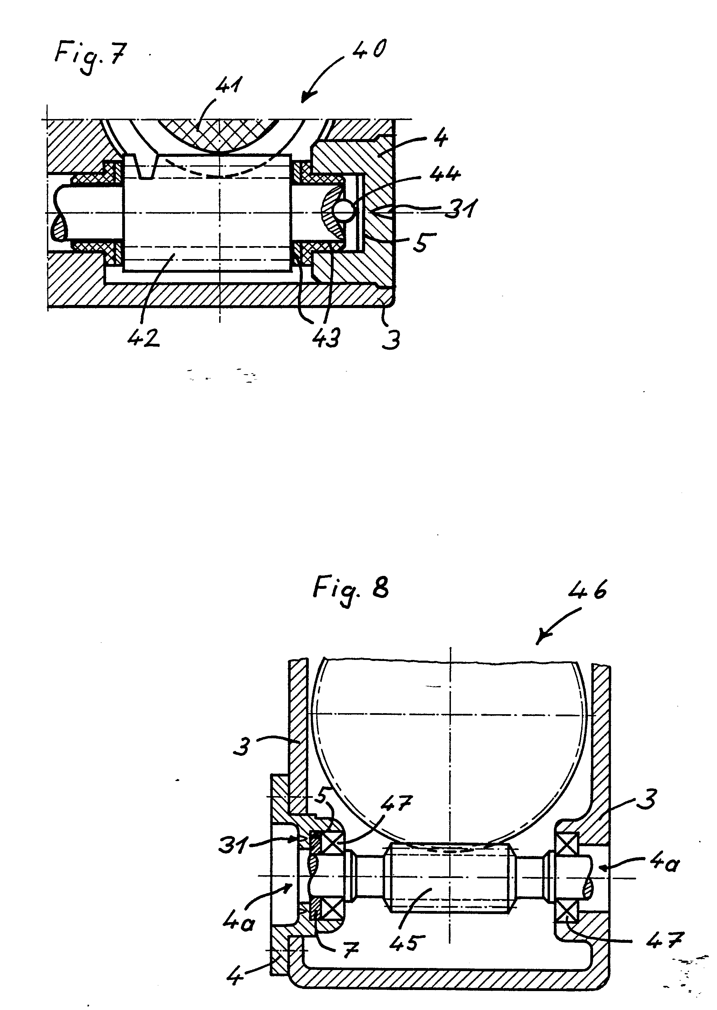

Fig. 7 zeigt einen Teilquerschnitt durch ein im ganzen mit 40 bezeichnetes Schneckengetriebe als weiteres Ausführungsbeispiel des erfindungsgemäßen Getriebes. Das durch die Schnecke 42 angetriebene Getrieberad 41 besitzt Gleitlager 43, deren Axialspiel über eine axiale Punktlagerung 44 durch eine zentral in der axialen Anlagefläche 5 angebrachten Verformung 10 ausgeglichen ist. Dieser Verformung 10 entsprechend liegt die Einpreßstelle 31 zentral im Gehäusedeckel 4. Der Vorteil dieser Ausgestaltung liegt darin, daß zum Ausgleich des Axialspieles 8 ein zentraler Verformungsbereich 10 und damit auch eine einzige Einpreßstelle 31 ausreicht.

In Fig. 8 ist die Schnecke 45 eines im ganzen mit 46 bezeichneten, zur übertragung großer Kräfte geeigneten Schneckengetriebes mit Wälzlagern 47 versehen, wobei das Axialspiel über die Stützscheibe 7 durch Verformungen am Umfang der Anlagefläche 5 ausgeglichen ist. Die in der Zeichnung nicht sichtbaren minimalen Verformungen 10 sind von außen in den Gehäusedeckel 4 eingepreßt, wie an den Einpreßstellen 31 erkennbar ist.

Bei den dargestellten Konstruktionen erweist es sich als zweckmäßig, wenn diejenigen Gehäuseteile, die mit ihrer Innenfläche als Anlagefläche 5 für die Abstützung der axialen Lagerung 6 der Getrieberäder 2 dienen, aus einem kalt fließfähigem Werkstoff, vorzugsweise aus Zink-Druck-Guß, einer Aluminiumlegierung, einer Stahllegierung od. dgl. bestehen. Bei Verwendung kalt fließfähiger Werkstoffe können die Getriebe auch aus Kunststoffgetrieberädern bestehen, weil die Gefahr des Schmelzens des Kunststoffes, wie sie bei sonst notwendig heißer Verformung auftritt, vermieden wird. Die in den dargestellten Ausführungsbeispielen verwandten Abstützscheiben bestehen zweckmäßigerweise aus einer Stahllegierung, insbesondere dann, wenn es sich, wie in den Ausführungsbeispielen der Fig. 1, 2, 5 und 7 um Getriebe mit axialen Gleitlagern handelt und sie zusätzlich zur Druckbelastung der Abnützung durch Reibung ausgesetzt sind.

Werden die in den Ausführungsbeispielen der Fig. 1, 2 und 5 die Getrieberäder 2 radial gleitend gelagert, so kann der Axialspielausgleich kombiniert werden mit einem Ausgleich bzw. einer Einengung eines etwa vorhandenen Radialspieles. Dazu müssen die Einpreßstellen nahe genug am Innenrand der Durchtrittsöffnung 4 a des Getriebegehäuses 3 liegen, der als radiales Gleitlager dient. Durch die Verlagerung der Einpreßstellen 31 nahe an die Durchtrittsöffnungen 4 a wird eine merkbare Materialverformung bzw. Verschiebung in radialer Richtung gegen das Getrieberad hin bewirkt. Axialer und radialer Spielausgleich können somit in einem Arbeitsvorgang vorgenommen werden.

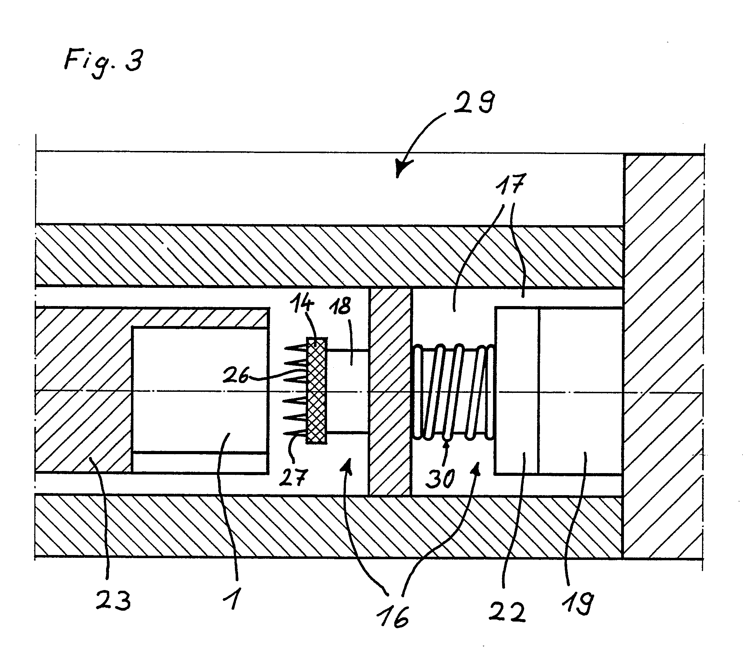

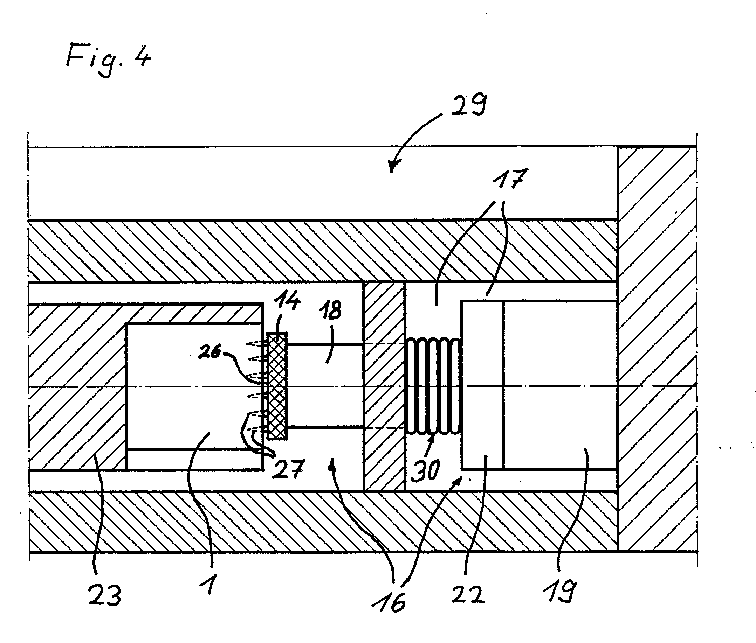

Die Fig. 3 und 4 zeigen das Verfahren der Herstellung der Axialspiel-einengenden Verformungen 10. Eine im ganzen mit 29 bezeichnete Verformungsvorrichtung besteht aus einem Widerlager 23 und einer Stempeleinheit 16. In das Widerlager 23 wird das Getriebe 1, 32, 37, 40, 46 o. ä. so eingespannt, daß der zu verformende Gehäusedeckel 4 bzw. das zu verformende Gehäuseteil 3 a (mit der Fläche senkrecht zur Zeichenebene) dem Verformungswerkzeug des Stempels 14 der Stempeleinheit 16 zugewandt ist. Im dargestellten Ausführungsbeispiel wird das Verformungswerkzeug durch einen Kolben 18 bewegt, welcher durch einen Arbeitszylinder 19 angetrieben wird. Wird nun der Kolben 18 aus dem Zylinder 17 herausgetrieben, so dringen die als Dornen 27 ausgebildeten Vorsprünge des Verformungswerkzeuges in den zu verformenden Teil des Getriebegehäuses 3 a ein bis zu dem Zeitpunkt, in dem eine Kraftmeßdose 22 über die Steuerventile des Arbeitszylinders 19 den weiteren Vorschub des Kolbens 18 unterbindet. Die Kraft, bei der jeweils abgeschaltet wird, wird durch die Dicke des zu verformenden Gehäuseteiles, durch die Form der Vorsprünge 27, welche auf der Scheibe 26 des Verformungswerkzeuges montiert sind und die Größe des einzuengenden Axialspiels bestimmt. Ausgeprägte Verformungen 10 werden hierbei durch spitzwinklige, flache Verformungen 10 durch stumpfwinklige Vorsprünge 27, Dornen od. dgl. bewirkt. Durch eine geeignete Wahl der Vorsprünge kann auch eine kontinuierliche Verformung der Anlagefläche erreicht werden. Dies wird insbesondere dadurch erreicht, wenn der Vorsprung 27 als ringförmiger Keil ausgebildet ist. Eine weitere mit der bisher dargestellten Methode kombinationsfähige Art der Axialspieleinenung besteht darin, den Gehäusedeckel 4 bzw. das entsprechende Gehäuseteil 3 a in axialer Richtung gegen das Getrieberad trichterförmig zur Durchtrittsöffnung hin zu verbiegen. Dies wird zweckmäßigerweise durch flache Vorsprünge 27 des Stempels 14 erreicht, da hier die zur Verformung notwendigen Kräfte sehr hoch sind und damit gleichzeitig zur gewünschten trichterartigen Verformung des Gehäusedeckels 4 bzw. des entsprechenden Gehäuseteiles 3 a führen. Im Ausführungsbeispiel nach den Fig. 3 und 4 wird eine gleichmäßige Verformung des zu bearbeitenden Getriebes dadurch erreicht, daß der Stempel 14 eine Scheibe 26 mit mehreren auf einem Kreis angeordneten sehr eng beieinander stehenden Dornen 27 aufweist.

Aufgrund des gewählten fließfähigen Werkstoffes des Getriebegehäusedeckels 4 bzw. des Gehäuseteiles 3 a kann die Verformung kalt vorgenommen werden. Auf diese Weise kann das Axialspiel auch von solchen Getrieben ausgeglichen werden, die Kunststoffgetrieberäder enthalten, denn die Gefahr des Schmelzens des Kunststoffes wie sie bei heißer Verformung sonst auftreten kann, wird bei kalter Verformung von vornherein vermieden. Zudem ergeben sich bei kalter Verformung keine temperaturbedingten Ver spannungen des Getriebegehäuses 3. Die kalte Einpressung der Verformungen 10 hat zudem den Vorteil, daß sich nicht neues Axialspiel 8 durch Rückbildung der temperaturbedingten Materialausdehnung einstellt.

Die vorbeschriebene erfindungsgemäße Axialspieleinengung ist in ihrer Funktion grundsätzlich unabhängig von der Ausgestaltung des einzelnen Getriebes. Sie funktioniert bei allen mit Rädern arbeitenden Getrieben, so z. B. auch bei Reibradgetrieben.

**Ansprüche**

1. Getriebe mit wenigstens einem Getrieberad, welches eine axiale Lagerung und eine axial wirkende, im Gehäuse oder an der Innenseite eines Gehäusedeckels befindliche Anlagefläche aufweist und zwischen Anlagefläche und dem Getrieberad eine Abstützung vorhanden und zwischen Abstützung und Anlagefläche ein Axialspielausgleich oder eine Axialspieleinengung vorgesehen ist, **dadurch gekennzeichnet,** daß als Axialspielausgleich bzw. -einengung nach der Montage des Getriebes (1) kalt angeformte, gegen das Getrieberad (2) gerichtete, über den Umfang verteilte Verformungen (10) der Anlagefläche (5) des Gehäuses (3, 3 a) bzw. des Gehäusedeckels (4) vorgesehen sind.

2. Getriebe nach Anspruch 1, dadurch gekennzeichnet, daß die kalt ausgeformten Verformungen (10) gleichmäßig am Umfang (9) verteilt sind und/oder als gleichmäßig umlaufende Wulst ausgebildet sind, und/oder daß im Bereich eines Getriebeaustrittes der Randbereich der Anlagefläche (5) insgesamt, z. B. trichterartig, nach innen verformt ist.

3. Getriebe nach Anspruch 1 oder 2, dadurch gekennzeichnet, daß der die Anlagefläche (5) aufweisende Gehäuseteil aus einem kalt fließfähigen Werkstoff, insbesondere Metall, vorzugsweise Zink-Druck-Guß, einer Aluminiumlegierung, einer Stahllegierung od. dgl. besteht.

4. Getriebe nach einem der Ansprüche 1 bis 3, dadurch gekennzeichnet, daß der zu verformende Bereich der Anlagefläche (5) gegenüber dem übrigen Getriebegehäuse (3) eine verringerte Wandstärke hat.

5. Getriebe nach einem der Ansprüche 1 bis 4, dadurch gekennzeichnet, daß die Abstützung aus einer Abstützscheibe (7), vorzugsweise aus gehärtetem Stahl besteht.

6. Getriebe nach einem der Ansprüche 1 bis 5, dadurch gekennzeichnet, daß das Maß der Verformung (10) die Differenz zwischen dem ursprünglichen, produktionsbedingten Axialspiel (8) und dem für den Lauf des Getrieberades (2) notwendigen Spiel (8 a) ist.

7. Verfahren zum Axialspielausgleich bei einem Getriebe nach einem der Ansprüche 1 bis 6, dadurch gekennzeichnet, daß nach dem Zusammenbau des Getriebes (1) die Anlagefläche (5) für das Getrieberad (2) oder für eine zwischen Getrieberad (2) und Anlagefläche (5) befindliche Abstützscheibe durch Verformungen, die von außen in den Gehäusedeckel (4) oder in das Gehäuse (3) mit einer begrenzten Kraft, die kleiner ist als die ein axiales Verformen des Getrieberades (2) bewirkende Kraft eingepreßt werden, so verformt wird, daß das ursprünglich vorhandene Axialspiel (8) eingeengt wird.

8. Verfahren nach Aspruch 7, dadurch gekennzeichnet, daß alle Verformungen (10) gleichzeitig in den Gehäuse deckel (4) bzw. in das Gehäuse (3) eingepreßt werden.

9. Verfahren nach Anspruch 7 oder 8, dadurch gekennzeichnet, daß die Verformung (10) nahe dem Umfang der Durchtrittsöffnung (4 a) in den Gehäusedeckel (4) bzw. in das Gehäuse (3) eingepreßt werden.

10. Vorrichtung zur Durchführung des Verfahrens nach einem der Ansprüche 7 bis 9, dadurch gekennziechnet, daß es ein Widerlager (23) für das Getriebe (1) und eine Stempeleinheit (16) mit einem bewegbaren Stempel (14) aufweist, der z. B. von einem Arbeitszylinder (19), einem Spindelmotor o. ä . angetrieben ist, wobei der Stempel (14) als Verformungswerkzeug ausgebildet ist oder das Verformungswerkzeug trägt.

11. Vorrichtung nach Anspruch 10, dadurch gekennzeichnet, daß zur Ansteuerung der Stempeleinheit (16) ein Kraftbegrenzer vorgesehen ist, der über einen Regelkreis beim Erreichen der vorbestimmten Verformungskraft selbsttätig den weiteren Vorschub des Stempels (14) unterbindet.

12. Vorrichtung nach Anspruch 10 oder 11, dadurch gekennzeichnet, daß als Kraftbegrenzer eine Kraftmeßdosse (22) zur Ansteuerung der Stempeleinheit (16) vorgesehen ist.

13. Vorrichtung nach einem der Ansprüche 10 bis 12, dadurch gekennzeichnet, daß als Stempelantrieb ein Arbeitszylinder (19) mit einem Kolben (18) vorgesehen ist, und daß die Kraftmeßdose (22) zur Ansteuerung des Arbeitszylinders (19) ausgebildet ist.

14. Vorrichtung nach einem der Ansprüche 10 bis 13, dadurch gekennzeichnet, daß der Stempel (14) eine Scheibe (26) mit vorzugsweise auf einem Kreis angeordneten Vorsprüngen (27), insbesondere Dornen od. dgl. aufweist, die zur Erreichung einer ausgeprägten Verformung (10) spitzwinklig oder zur Erreichung einer flachen Verformung (10) stumpfwinklig ausgebildet ist.

Fig. 1

Fig. 2

Fig. 3

Fig. 4

Fig. 5

Fig. 6

Fig. 7

**40**

41

4

44

31

5

42  43  3

Fig. 8

**46**

3

5  47

31

4a

4a

7  45  4  47  3